Europäisches Patentamt

European Patent Office

Office européen des brevets

(19)

(11) Publication number: **0 157 370**
A2

(12) **EUROPEAN PATENT APPLICATION**

(21) Application number: **85103753.1**

(22) Date of filing: **28.03.85**

(51) Int. Cl.⁴: **F 25 B 39/00,** B 21 D 53/08
// F24J2/26

---

(30) Priority: **03.04.84 NO 841316**

(43) Date of publication of application: **09.10.85**
**Bulletin 85/41**

(84) Designated Contracting States: **AT BE CH DE FR GB IT
LI LU NL SE**

�]Applicant: **NORSK HYDRO A/S, Bygdoy Allé 2,
N-Oslo 2 (NO)**

(72) Inventor: **Clausen, Edvin List, Kogsveien 10,
DK-6270 Tonder (DK)**

(74) Representative: **WILHELMS, KILIAN & PARTNER
Patentanwälte, Eduard-Schmid-Strasse 2,
D-8000 München 90 (DE)**

---

(54) **Heat exchanger panel and method of maufacture.**

(57) The invention concerns a heat exchanger panel for evaporator or condensor in a refrigerator. The panel comprises a plate (2) with several parallel running grooves (21) with converging walls (22) for locking of heat transporting pipes (3). The invention furthermore concerns a method for manufacturing the heat exchanger panel comprising extruding of profiled plates (2) with grooves (21), placing of individual or connected pipes (3) in the grooves (21) and exposing of the pipes (3) to plastic deformation so that their circumference conforms to and fills out the cavity of the groove (21).

ACTORUM AG

# WILHELMS · KILIAN & PARTNER

## PATENTANWÄLTE

PEAN PATENT ATTORNEYS          EUROPAISCHE PATENTVERTRETER          MANDATAIRES EN BREVETS EUROPÉENS

0157370

Norsk Hydro a.s.
Oslo / Norway

## Heat exchanger panel and method of manufacture

DR. RER. NAT. ROLF E. WILHELMS
DR. RER. NAT. HELMUT KILIAN
DR.-ING. JÜRGEN SCHMIDT-BOGATZKY *

EDUARD-SCHMID-STRASSE 2
8000 MÜNCHEN 90

Priority: April 3, 1984 - Norway - No. 841316

TELEFON (089) 652091
TELEX 523467 (wilp-d)
TELEGRAMME PATRANS MÜNCHEN
TELEFAX G3/G2 (089) 6516206

P 2289-EP

The present invention concerns a heat exchanger panel, or more particularly, an evaporator or condensor for freezers or refrigerators and possibly cooling, solar or heating panels and the method for manufacturing such heat exchanger panels.

Today the major part of such panels in freezers and refrigerators are manufactured by means of the so-called rollbond process. The desired pattern for circulation of the coolant is applied to thin aluminium sheets, the sheets are then rolled together in pairs and in this way welded into units. By means of compressed air the sheets are "blown" apart, forming circulation ducts according to the applied pattern, which is not welded during the rolling.

This system has obvious limitations, first of all as regards the maximum size of the units, the flexibility as regards shape variation, minimal wall thickness, and possibilities of increasing or varying the heat emitting/absorbing surface.

From the patent literature several types of extruded aluminium evaporators are known which aim to overcome the disadvantages in connection with the above-mentioned rollbond manufactured panels.

U.S. Patent No. 2.212.912 describes and discloses an evaporator for a refrigerator manufactured by extrusion in aluminium with evaporator plate, ducts for circulation of cooling fluid and cooling fins as an integrated unit.

2

0157370

The problems/disadvantages of this evaporator are the many connections/couplings to be made during the assembling/ installation of the evaporator. To form a continuous circulation duct the adjacent open ducts in the evaporator plate must be connected to each other by means of U-tube bends; furthermore, connections must be made to the manifold, main line etc. According to the patent all these connections are made by means of welding and/or casting-in of metal with a low melting point (soldering), and thus besides high costs of production they represent an enormous challenge as regards welding quality to secure tight conncetions and to avoid corrosion problems.

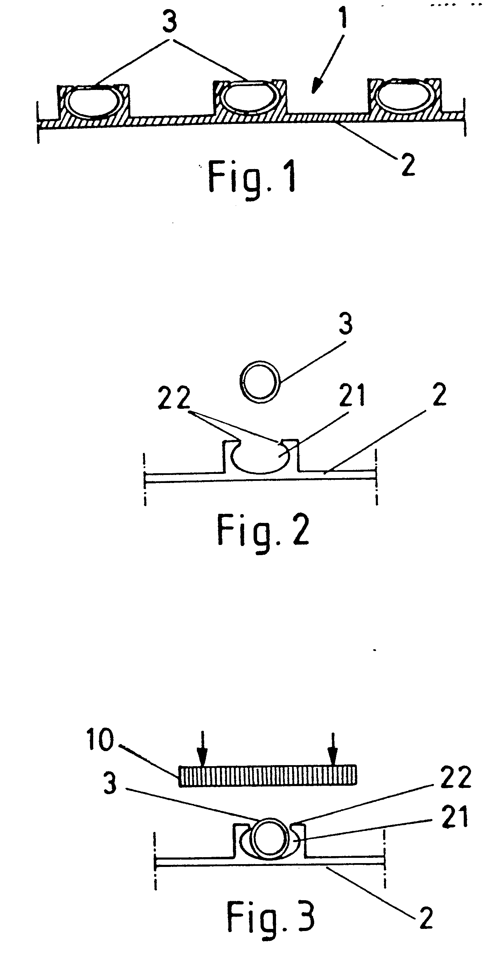

Another example of application of extruded aluminium evaporator plates can be seen in Figures 2 and 3 in Norwegian laid open publication No. 137.292. An integrated evaporator plate is provided with cooling fins and open or closed ducts used as fastening device for pipes. The pipes can be attached to the ducts by gluing (closed ducts) or gluing combined with plastic deformation of the side walls to open ducts surrounding the inserted pipes. A reduced heat transfer between pipes and duct/plate caused by gluing and poor mechanical attachment to open ducts with the risk that the pipes will become loose during the service operation because of vibrations are the disadvantages of this construction in addition to the abovementioned problems of joining/connecting the individual pipes.

The object of the invention is therefore to produce a heat exchanger panel without the disadvantages and limitations mentioned above, while offering a new and improved construction with superior heat exchange parameters, low production costs, and the possibility of modular construction to an unlimited length (size) of the panels.

A further purpose of the invention is to provide a new method of manufacturing heat exchanger panels based on strictly

0157370

mechanical joining of extruded/profiled plates with heat
transporting pipes and flexible construction of such (module)
panels to the desired length, and to minimize the number of
necessary connections on the pipe side.

According to the invention a heat exchanger panel and a
method for manufacturing such panels have been provided as
it will appear from patent claims 1 - 5.

Referring to the drawings the invention will be described
below in more details in connection with examples of the
manufacture of an evaporator according to the invention.

Fig. 1            shows a section through the heat exchanger
                  panel,

Fig. 2 and 3      illustrate steps in the manufacturing process of the panel,

Fig. 4            shows schematically a section of the heat
                  exchanger panel with pipes for circulation
                  of fluid arranged in an "endless" spiral
                  pattern,

Fig. 5 and 6      show schematically two elongated variations
                  of the panel with individual connection of
                  pipes to the circulation system,

Fig. 7            is a section along the line I-I in Fig. 6
                  and shows in detail the connection of pipes
                  to the panel, and

Fig. 8 and 9      show schematically two variations of panel
                  design as regards the placing of ducts/
                  grooves in relation to the profile plate.

Figure 1 shows a vertical section through a heat exchanger panel (1) which according to the invention consists of a profiled extruded plate (2) with several parallel running grooves surrounding and embedding the pipes (3) for circulation of cooling/heating medium.

The design of the plate (2) and the principle for the method of embedding the pipes and the manufacturing of the heat exchanger panel according to the invention will now be described with reference to Figures 2 and 3.

Figure 2 shows in a section and more detailed the design of the profiled plate (2) with grooves (21) given a half-closed oval cross-section and with a distance (opening) between the walls (22) of the groove corresponding approximately to the diameter of the pipe (3) so that the pipe can be passed through the opening and embedded in the groove (21).

In Figure 3 the pipe (3) has been embedded in the groove (21). When employing the method of manufacture according to the invention, tne mutual dimensioning of the pipe diameter, the cross-section of the groove, and the shaping of the groove cavity secure a robust, intimate contact between the pipe and the plate and thus a superior heat transfer between the pipe and the plate together with a reliable locking of the pipes. After introduction of all pipes (3) into the grooves (21) the pipes are exposed to a plastic deformation either through a press operation by means of a press (10) as shown schematically on Figure 3 or by means of other suitable methods, for example rolling. By this plastic deformation the original round cross-section of the pipe conforms to the cavity of the groove (21), which is filled completely by the pipe (3), and the pipe is locked to the groove (21) engaged by the converging walls (22).

The obvious heat exchange advantages gained by constructing and manufacturing a heat exchanger panel in accordance with this method can best be seen in Figure 1. The "open" part of the pipes (3) is flattened and is on a level with the top of the converging walls of the groove. This is an important construction detail which ensures that once locked into the grooves the pipes have no tendency (possibility) to become loose. The forces (stress of material) occurring in the walls of the groove as a result of a certain degree of elastic deformation of these walls - as a reaction to plastic deformation and expansion of the pipes in the groove cavity - have a locking effect. The problem of "jammed" pipes in ducts known from previous constructions, where the pipes maintain their round shape and therefore bulge out of the groove and have a tendency to be pushed out of the embedding by the pressure from the groove walls - so-called spring-back effect - is eliminated. Furthermore by this reshaping of pipes from round diameter to flat-oval pipes in the grooves an increased heat-transferring surface of the pipes is obtained.

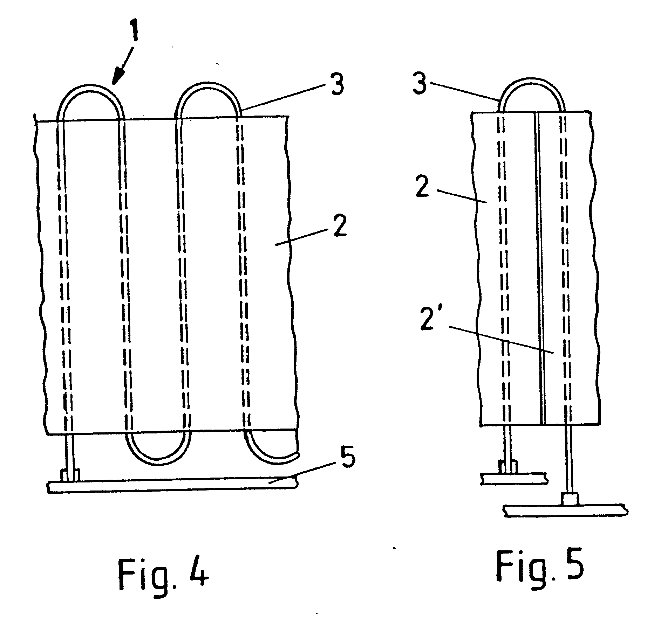

Figure 4 shows schematically the most ordinary design of the panel according to the invention, for example an evaporator, in which the heat transporting pipe (3) consists of one single pipe embedded in the plate (2) in an endless spiral (zigzag) pattern attached to a connection pipe (5) connecting the evaporator to the rest of the circulation system in a refrigerator/freezer.

Figure 5 illustrates another application of the heat exchanger panel, in which the method for embedding pipes according to the invention is used at the same time with advantage for connecting several plates (modules) to form a panel of practically unlimited size and shape, such as a cooling ceiling. Two panels (2, 2') are shown joined together by means of individual pipes (3) with U-bends, which are in this

0157370

case - because of the large dimensions of the plates - individually connected to the outer circulation system - the pipes (5) and (6).

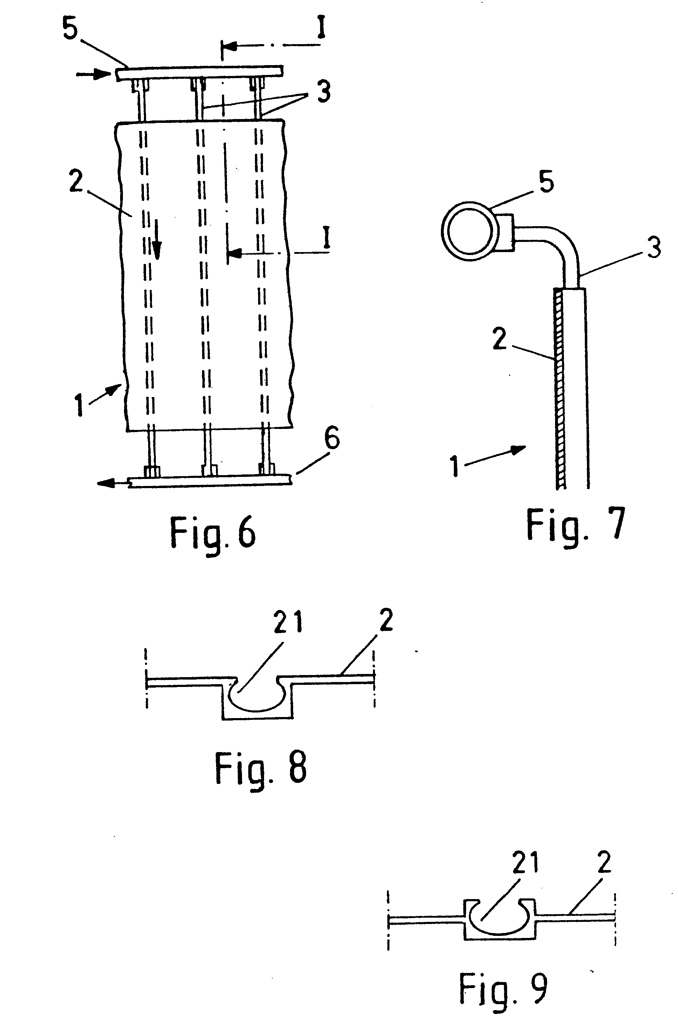

Figure 6 shows another variation of the panel with individually connected pipes (3), in this case as alignment pipes between the two connecting pipes (5) and (6).

Figure 7 shows in a section and in more details the connection of the panel (1) to the circulation system along the line I-I in Figure 6, in which (3) is the free non-deformed end of the pipe (pipes) from the profiled plate (2). Because of its round cross-section the pipe can by means of simple, current, mechanical joining means, as e.g. lock-rings or rolled-connections, be connected to the circulation system through pipe (5).

The heating panel according to the invention is not limited to the designs mentioned and disclosed above. Various requirements as to outer design of the panel, its construction at one level or joining of modules at different angles, can be allowed for in accordance with and within the framework of the invention. The pipes for transport of a heat absorbing/ emitting fluid can e.g. be replaced by insulated electrical conductors in cases where the heat exchanger panel is (forms part of) an electric heater. Figures 8 and 9 show schematically two variations of the profiled plate (2) with different placing of the grooves (21) in relation to the plate.

It is advantageous to make the heating panel with all its components in aluminium, i.e. extruded aluminium plates with cooling fins (not shown on the drawings) and extruded and/or drawn aluminium pipes. Although other materials, such as copper, can be used in the heating panel within the framework of the inventions, a construction entirely of aluminium has obvious advantages such as a saving in weight and reduced corrosion problems.

## Claims

1.    Heat exchanger panel comprising a profiled heat absorbing or heat emitting plate (2) and a heat transporting system of pipes (3) attached to the plate, where the said plate (2) comprises several parallel running grooves (21),
c h a r a c t e r i z e d   i n   t h a t
the grooves (21) ara designed with half-closed, oval cross-section with the largest diameter of the groove (21) larger than the diameter of the pipes (3) and with the walls of the groove (22) converging towards the open end (23) and locking the pipes which are introduced into the grooves (21) and subsequently exposed to plastic deformation so that they fill the cavity of the groove.

2.    Heat exchanger panel according to claim 1,
c h a r a c t e r i z e d   i n   t'h a t
the free part of the pipes (3) is flattened and practically on a level with the converging side walls (22) in the groove (21).

3.    Procedure for manufacturing of heat exchanger panel in a cooling or heating system according to claim 1 or 2,
c h a r a c t e r i z e d   i n
a combination of the following process stages:

-    extruding of a profiled plate (2) comprising a several substantially parallel running grooves (21) with half-closed oval cross-section with the largest diameter of the groove larger

0157370

than the diameter of the heat transporting
pipe (3) in the system,

- embedding of individual or connected pipes (3) in
  the grooves (21), and

- subsequent transfer of the plate with embedded
  pipes to a device for causing plastic deformation
  to the pipes so that their circumference conforms
  to and fills out the cavity of the groove, and
  the pipes are locked into the grooves under converging walls (22).

4. Method according to claim 3,
   c h a r a c t e r i z e d   i n   t h a t
   plastic deformation of pipes is caused by a press
   operation.

5. Method according to claim 3,
   c h a r a c t e r i z e d   i n   t h a t
   plastic deformation is made by rolling of the pipes
   in the grooves.

0157370

**Fig. 1**

**Fig. 2**

**Fig. 3**

Fig. 4

Fig. 5

0157370

Fig. 6

Fig. 7

Fig. 8

Fig. 9